# EUROPEAN PATENT APPLICATION

(11) **EP 0 586 750 A1**
(43) Date of publication of application: **16.03.1994**
(21) Application number: 92202774.3
(22) Date of filing: 10.09.1992
(51) Int. Cl.: E04B 2/72

(54) **Section system**

(71) Applicant: SCANDEX ALUMINIUM N.V., NL-9601 LX Hoogezand (NL)
(72) Inventor: Gibcus, Wilhelmus Paschalis, NL-9601 LS Hoogezand (NL); Kamphuis, Hilbrand, NL-9621 CA Slochteren (NL); Hemmes, Ties Folkert, NL-9981 GR Uithuizen (NL)
(74) Representative: Smulders, Theodorus A.H.J., Ir.

(57) **Abstract**

The invention relates to a section system whose sections can be coupled without tools and with a slight effort and which allows relatively great tolerances in the dimensions of matching longitudinal edge portions without this leading to rattling or excessive leakage between the sections.

Longitudinal edge portions (1, 2) of the sections comprise stops (3, 4, 5, 6). One of the longitudinal edge portions (1, 2) comprises a flexible finger (7, 10) with a first hooking member (8, 11). The other longitudinal edge portion (1, 2) comprises a second hooking member (9, 12). In coupled condition, the stops (3 and 5; 4 and 6) rest each other, the first hooking member (8, 11) engages behind the second hooking member (9, 12) and the flexible finger presses the first hooking member resiliently against the second hooking member, so that the stops (3 and 5; 4 and 6) are clamped against each other.

## Description

The invention relates to a section system comprising a first and a second section having matching longitudinal edge portions for coupling the first and the second section to each other along those longitudinal edge portions.

Such section systems are known inter alia in designs adapted for interconnecting sections by means of click-fit connections, for instance aluminum sections in coach work for making truck boards, in building construction for making partition walls or wall covering and for attaching a strip to a framework for retaining a plate-shaped element such as a pane.

A drawback of the known section systems is that constructions assembled therefrom often rattle. Another problem frequently encountered in such constructions is excessive leakage between the sections.

Further, in the known section systems, a very high degree of exactness of the longitudinal edge portions is required so as to obtain an acceptable fit of the sections relative to each other. This entails that moulds for making such sections must already be replaced when a relatively slight wear has developed and that such sections can only be designed with one particular external surface, for instance, varnished, uncoated, or anodized.

A further drawback of the known section systems is that they can often be coupled to each other only with special tools, in particular when they are of great length.

The object of the invention is to provide a section system whose sections can be coupled to each other with a slight effort without tools and which allows relatively large tolerances in the dimensions of the matching longitudinal edge portions without this leading to rattling or excessive leakage between the sections.

This object is achieved according to the invention, in that in the sections according to the invention, viewed in cross-section, the matching longitudinal edge portions each comprise a pair of spaced apart stops oriented substantially in the same direction, at least one of the longitudinal edge portions comprises at least one flexible finger having a free end comprising a first hooking member, at least the other of the longitudinal edge portions comprises a second hooking member and, in coupled condition, corresponding stops of the first and the second sections support each other, the first hooking member engages behind the second hooking member, the flexible finger is elastically bent and the first hooking member presses resiliently against the second hooking member, in such a manner that the stops are clamped against each other.

The flexible finger or fingers and the associated hooking members draw the sections that are coupled to each other, against each other, so that even in the case of relatively large deviations of the dimensions of the profile of the longitudinal edge portions, the sections are yet secured to each other without clearance.

Further, because the fingers are flexible, relatively little force is required to couple the sections to each other, so that this can be done without tools.

The relatively rigidly supported, spaced-apart stops of each longitudinal edge portion, oriented substantially in the same direction, determine the mutual distance of the sections, so that this distance is controlled relatively accurately. Thus, undesired curvature or undulation in a wall made up of a series of mutually coupled sections is prevented.

The invention can also be embodied in a section designed as a part of a section system according to the invention. Such a section may comprise one longitudinal edge portion capable of being coupled to a matching longitudinal edge portion of another section, but may also comprise two or more longitudinal edge portions, in such a manner that, for instance, a plurality of identical sections can be coupled to each other in series.

The invention can also be embodied by a section designed for use as part of a section system according to the invention.

Hereinafter the invention will be further explained and illustrated on the basis of one practical embodiment preferred most at present, with reference to the accompanying drawings.

In said drawings:
Figs 1-3 are cross-sectional views of longitudinal edge portions of sections of a section system according to the invention in successive stages of the mutual coupling of those sections, and
Fig. 4 is an example of a wall assembled from four sections of a section system according to the invention.

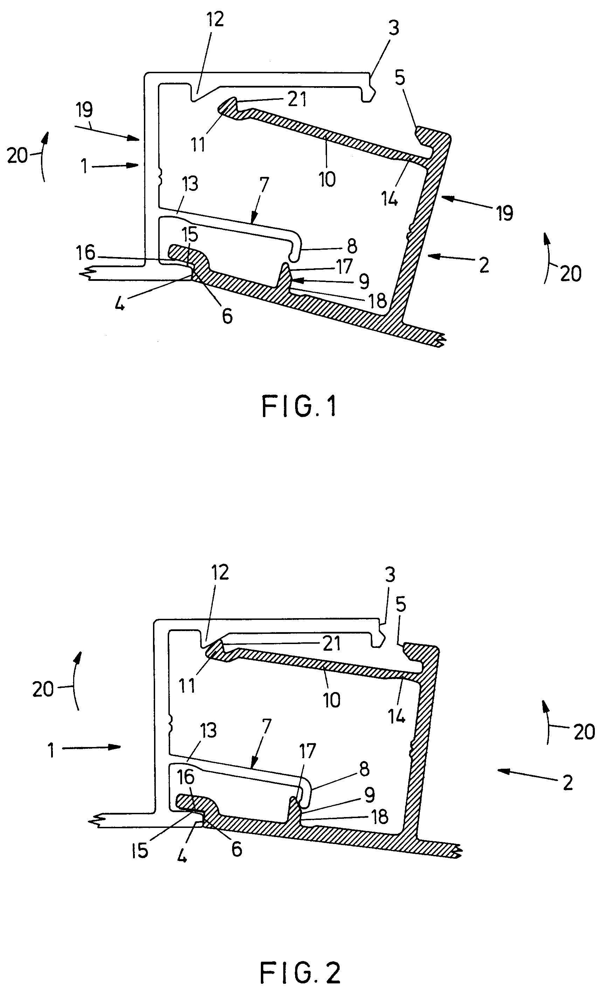

Figs 1-3 show longitudinal edge portions 1 and 2 of, rspectively, a first and a second section of a section system according to a practical example of the invention. The drawing of the longitudinal edge portion 2 of the second section is hatched, while the drawing of the longitudinal edge portion 1 of the first section is unhatched.

The longitudinal edge portions 1 and 2 are designed for mutually coupling the first and the second sections along those longitudinal edge portions. Viewed in cross-section, the longitudinal edge portions each comprise a pair of spaced apart stops 3, 4 and 5, 6, respectively, substantially oriented in the same direction. The longitudinal edge portion 1 of the first section comprises a flexible finger 7 having a free end comprising a first hooking member 8 and the longitudinal edge portion 2 of the second section comprises a corresponding second hooking member 9. The longitudinal edge portion 2 of the second section also comprises a flexible finger 10 having a free end comprising a first hooking member 11. A matching second hooking member 12 forms part of the longitudinal edge portion 1 of the first section.

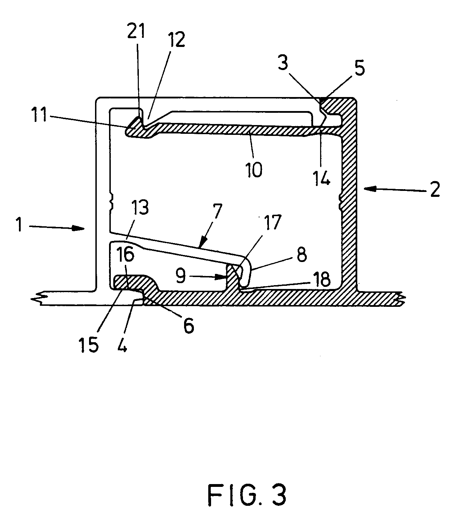

In coupled condition (see Fig. 3), corresponding respective stops 3, 5 and 4, 6 of the first and the second section are in mutual abutment, each of the first hooking members 8, 11 engages behind the corresponding second hooking member 9, 12, each of the flexible fingers 7, 10 is elastically bent and each first hooking member 8, 11 resiliently presses the second hooking member 9, 12 in a direction such that the stops 3 and 5, and 4 and 6, respectively, are clamped against each other.

Because the stops 3 and 5, and 4 and 6, respectively, are drawn against each other, ample tolerance in the dimensions of the profiles of the longitudinal edge portions 1 and 2 is allowable without this leading to rattling, leakage or problems in coupling the sections. The fingers 7 and 10 are flexible, so that they yield during assembly and are capable of taking up dimensional deviations by bending. The flexibility of the fingers in the sections according to the practical embodiment shown is obtained in that the fingers have a relatively great length and each have a narrowed portion 13, 14 at their base. If the finger have too much prestress, due, for instance, to dimensional deviations or a relatively thick coating, they can also deform elastically as the sections are coupled, all this in such a manner that, on the one hand, coupling does not require the exertion of too much force and, on the other, after coupling, sufficient elasticity is left for resiliently pressing the hooking members together.

The stops 3-6 are supported by flanges of the longitudinal edge portions 1 and 2, which are relatively form-retaining with regard to the fingers 7 and 10. Owing to the fact that the cooperating pairs of stops 3, 5, and 4, 6 are spaced apart and the stops are oriented substantially in the same directions, the mutual distance between the coupled sections is controlled accurately. Undesired curvature or undulation in a wall made up of a series of mutually coupled sections is thus prevented.

That the fingers 7 and 10 are flexible further offers an advantage in that the coupling of the sections requires relatively little force, even if a more than average deformation of the fingers is necessary. This can for instance be the case if the sections are provided with a coating.

In coupled condition (Fig. 3), one flexible finger 7 is spaced from the other flexible finger 10 and each finger extends near two abutting stops 3, 5, and 4, 6, respectively. It is thus accomplished that the longitudinal edge portions 1 and 2 of the mutually coupled sections, near each pair of mutually abutting stops 3, 5 and 4, 6, respectively, are drawn toward each other by one of the fingers 7 or 10. As a result, the stops 3 and 5, and 4 and 6, respectively, are forcefully and reliably clamped against each other and so retained.

It is noted that within the framework of the present invention, it is also possible to provide the fingers in other positions or use only one finger, preferably extending centrally between the stops. In that case, however, a less reliable clamping of the stops is obtained. It is further noted that the second hooking member, like the corresponding first hooking member, can be provided on a flexible finger, so that both cooperating hooking members are each resiliently suspended by means of a flexible finger.

Of each pair of cooperating hooking members 8, 9 and 11, 12, one hooking member 9, 11 comprises a projection surface 18, 21 in the area where the other hooking member 8, 12, in coupled condition, presses against that hooking member 9, 11. The projection surface 18, 21 intersects at an acute angle the path along which the first hooking member 8, 11 moves upon bending of the corresponding finger 7, 10.

Because, thus, of two cooperating hooking members, at least one has a projection surface which intersects at an acute angle the path of movement of the first hooking member 8, 11, it is achieved in a simple manner that the spring force exerted by the fingers 7, 10 via the associated first hooking member 8, 11 results in a normal force exerted on the projection surface 18, 21, which force is so directed that it presses the stops 3, 5 and 4, 6 against each other. This effect is also obtained in the case of variation in the relative position of the hooking members 8, 9 and 11, 12. The projection surfaces 18, 21 are so directed that in the case of clearance between the stops 3, 5 or 4, 6, a displacement of the first hooking member 8, 11 relative to the second hooking member 9, 12 in the direction of the spring force exerted by the associated finger 7, 10 effects a displacement of the stops 3, 5 or 4, 6 toward each other. To that end, the projection surface 18, 21 cuts off the path of the first hooking member 8, 11, viewed in the direction of the spring force exerted by the finger 7, 10, at an acute angle, from the fixed end of the finger 7, 10.

If the angle between the projection surface and the path of movement of the first hooking member is selected to be sufficiently acute, it can be achieved that a section construction, if it is not entirely free of clearance initially, draws itself together upon variations in the load on the coupling between two sections. When the force that draws the sections apart drops away or decreases, the finger can exert further pressure on the first hooking member so as to draw the stops toward each other, but an increase of the force that draws the sections apart does not cause the first hooking member to shift back because then at the same time an increase of the normal force between the hooking members develops, such that these do not shift relative to each other. This effect is in any case obtained if the angle of the projection surface relative to the path of the first hooking member has been selected such that the tangent of this angle is smaller than the coefficient of friction between the hooking members, for instance an angle of a tangent smaller than 0.1 if the coefficient of friction between the hooking members is 0.1. The above-described effect can also be obtained with greater inclinations, but in that case the spring force exerted by the finger must be sufficiently great for this spring force, together with the force of friction, to prevent the first hooking member from shifting against the spring force.

If it is desired that the sections can be pulled apart, the angle between the projection surface and the path of movement of the corresponding first hooking member must naturally be chosen precisely such that the tangent of this angle is greater than the coefficient of friction between the hooking members.

Further, the matching longitudinal edge portions 1 and 2 each comprise a transverse stop 15, 16 oriented substantially transversely to the stops 3-6. In coupled condition, the transverse stops 15 and 16 are in mutual abutment, pressed together by the spring force exerted by the flexible fingers 7 and 10.

These transverse stops 15 and 16 ensure that the mutual distance of the coupled sections is not only controlled in a direction substantially transverse to the stops 3-6, but also in a direction substantially parallel to those stops 3-6. Because the transverse stops 15 and 16 are resiliently pressed against each other through the action of the flexible fingers 7 and 10, these stops 15 and 16 are also reliably retained in mutual abutment, whilst there is no necessity of setting strict requirements with respect to the exactness of the dimensions of the longitudinal edge portions 1 and 2 of the coupled sections. One set of transverse stops 15 and 16 is sufficient for obtaining a reliable mutual positioning of the sections because rotation of one section relative to the other section is already prevented by the stops 3-6 and the pulling force exerted by the fingers 7, 10 via the hooking members 8, 9, 11, 12 so as to clamp the stops 3-6 against each other.

In the sections according to the present practical embodiment, in coupled condition, the cooperating transverse stops 15 and 16 are located in a direction substantially perpendicular to the stops 3-6, spaced from a hooking member 8, 9 associated with the flexible finger 7 proximal to the transverse stops 15, 16. In coupled condition, a transverse stop 16 of one section is located on the inside behind the transverse stop 15 of the other section and a hooking member 9 associated with the flexible finger 7 proximal to the transverse stops 15, 16, extends from the outside to the hooking member 8 of the other section. The hooking member 9 extending from the outside has a side facing the other hooking member 8, with a sloping surface 17 and the projection surface 18. The hooking members 8, 9, 11, 12 are so arranged that if the transverse stops 15 and 16 are positioned against each other and the sections are so swung that the hooking members 8, 9, 11, 12 move toward each other, the hooking members 8, 9 associated with the finger 7 proximal to the transverse stops 15 and 16 overlap before the hooking members 11, 12 associated with the finger 10 remote from the transverse stops reach each other, and the one hooking member 8 associated with the finger 7 proximal to the transverse stops slides over the sloping surface 17 and the projection surface 18 of the other hooking member 9 cooperating therewith, until the hooking member rests against the projection surface 18 of that other hooking member 9.

The sections according to the present embodiment can be coupled to each other with a very slight effort, while yet a very stable connection between the sections is obtained.

For coupling the sections to each other, they must first be oriented in a position such that the longitudinal edge portions 1 and 2 to be coupled to each other are directed parallel to each other. Then the sections are moved toward each other in the directions indicated by arrows 19, in such a manner that the transverse stop 16 of the second section is hooked onto the transverse stop 15 of the first section, until the stops 4, 6 proximal to the transverse stops 15 and 16 abut and the hooking members 8 and 9 associated with the arm 7 proximal to the transverse stops are situated substantially opposite each other (see Fig. 1).

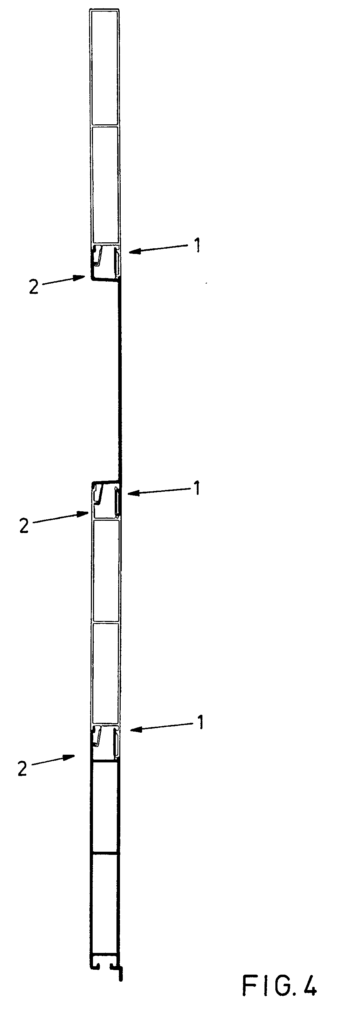

Then the sections are swung relative to each other as indicated by the arrows 20. As a result, the sloping surface 17 of the hooking member 9 engages behind the hooking member 8. As soon as the hooking member 8 abuts against the sloping surface 17, the finger 7 is bent, the extent of the bend increasing as the sections are swung further while the hooking member 8 slides over the sloping surface 17. For bending this finger 7, a great force can readily be applied by exerting moments on the sections in the directions indicated by the arrows 20, because the stops 4 and 6, together with the transverse stops 15 and 16, form a hinge and the distance from this hinge to the hooking members 8 and 9 is small in proportion to the width of each of the sections in its entirety (see, for instance, Fig. 4). It is therefore easy to exert on the sections a moment whereby a greater application of force is effected at the location of the hooking members 8 and 9 than the application of force that can be achieved with the known sections by pressing them against each other.

When during the swing of the sections relative to each other the position shown in Fig. 2 has been reached, the hooking members 11 and 12 associated with the finger 10 remote from the transverse stops 15, 16 abut, which produces a reaction force that urges the sections apart. However, the feature that in this position the hooking members 8 and 9 associated with the finger 7 proximal to the transverse stops 15, 16 are already in mutual engagement prevents the sections from moving away from each other in the area of the transverse stops 15. For the completion of the coupling of the sections it is therefore sufficient to swing the sections further relative to each other from the position shown in Fig. 2, as indicated by the arrows 20, until the position shown in Fig. 3 has been reached. Here, too, for bending the arm 10 remote from the transverse stops 15, 16, a great force can readily be exerted because the distance from the hooking members 11, 12 associated with that arm 10 to the common hinge of the two sections in the area of the transverse stops 15 and 16 is likewise small in proportion to the width of each of the sections in its entirety.

The hooking members 8, 9, 11, 12 have free edges of rounded configuration. This is advantageous for a smooth transition from the bending of fingers 7, 10 to the drawing together of the sections by the fingers 7, 10, in particular when during the coupling of two sections, parts of the sections engage each other before other parts do.

In coupled condition, the flexible fingers 7 and 10 are located between form-retaining walls carrying the stops 3-6. This offers the advantage that the flexible portions of the section in coupled condition are hidden from view. Thus, the appearance of a wall made up of sections according to the practical embodiment shown is not affected by the deformation of the flexible fingers.
Sections having longitudinal edge portions according to the embodiment shown are preferably made from an aluminum alloy. Within the framework of the invention, however, the sections may also be made of a different material, such as plastics, or from different materials.

## Claims

1. A section system comprising a first and a second section having matching longitudinal edge portions (1, 2) for coupling the first and the second section to each other along those longitudinal edge portions, wherein, viewed in cross-section, the matching longitudinal edge portions (1, 2) each comprise a pair of spaced apart stops (3, 4, 5, 6) oriented substantially in the same direction, at least one of the longitudinal edge portions (1, 2) comprises at least one flexible finger (7, 10) having a free end comprising a first hooking member (8, 11), at least the other of the longitudinal edge portions (1, 2) comprises a second hooking member (9, 12) and, in coupled condition, corresponding stops (3 and 5; 4 and 6) of the first and the second sections support each other, the first hooking member (8, 11) engages behind the second hooking member (9, 12), the flexible finger (7, 10) is elastically bent and the first hooking member (8, 11) presses resiliently against the second hooking member (9, 12), in such a manner that the stops (3 and 5; 4 and 6) are clamped against each other.

2. A section system according to claim 1, characterized in that at least one of the hooking members (9, 11) comprises a projection surface in the area where the hooking members (8 and 9; 11 and 12) in coupled condition are in mutual engagement, the first hooking member (8, 11) upon bending of the finger (7, 10) moves along a particular path and, in coupled condition, the projection surface (18, 21) intersects this path of movement at an acute angle.

3. A section system according to claim 1 or 2, characterized in that in coupled condition, two flexible fingers (7, 10) are located at a distance from each other, with each of these flexible fingers (7, 10) extending near two abutting stops (3 and 5; 4 and 6).

4. A section system according to any one of the preceding claims, characterized in that the matching longitudinal edge portions (1, 2) each comprise a transverse stop (15, 16) oriented substantially transversely to the above-mentioned stops (3-6), whilst in coupled condition the transverse stops (15, 16) are in mutual abutment and are pressed against each other by the spring force exerted by the flexible finger (7, 10).

5. A section system according to claims 3 and 4, characterized in that
in coupled condition, cooperating transverse stops (15, 16) of matching longitudinal edge portions (1, 2) are each located in a direction substantially perpendicular to the stops (3-6), spaced from a hooking member (8, 9) associated with the flexible finger (7) proximal to the transverse stops,
in coupled condition, a transverse stop (16) of one section is located on the inside behind the transverse stop (15) of the other section, and
a hooking member (9) associated with the flexible finger (7) proximal to the transverse stops (15, 16) extends from the outside to the hooking member (8) of the other section,
whilst at least one of these hooking members (9) has a surface facing the other hooking member (8), with a sloping surface and a projection surface (18),
the hooking members (8, 9, 11, 12) are arranged in such a manner that if the transverse stops (15, 16) are positioned against each other and the sections are swung in such a manner that the hooking members (8, 9, 11, 12) move toward each other, the hooking members (8, 9) associated with the finger (7) proximal to the transverse stops overlap before the hooking members (11, 12) associated with the finger (10) remote from the transverse stops (15, 16) reach each other, and the one hooking member (8) associated with the finger (7) proximal to the transverse stops slides over the sloping surface (17) and the projection surface (18) of the other hooking member (9) cooperating therewith, until it rests against the projection surface (18) of that other hooking member (9).

6. A section system according to any one of the preceding claims, characterized in that, in coupled condition, the flexible finger (7, 10) extends through an area between form-retaining walls carrying the stops (3-6).

7. A section for use as part of a section system according to any one of the preceding claims.
